# EUROPÄISCHE PATENTSCHRIFT

(11) **EP 2 375 393 B1**
(45) Veröffentlichungstag und Bekanntmachung des Hinweises auf die Patenterteilung: **28.11.2012**
(21) Anmeldenummer: 11155027.3
(22) Anmeldetag: 18.02.2011
(51) Int. Cl.: G08G 1/0965, H04L 9/32, H04L 29/06

(54) **Fahrerinformationseinrichtung und Verfahren zur bevorzugten Wiedergabe einer signierten Nachricht**
Driver information device and method for prioritised output of a signed message
Dispositif d'information du conducteur et procédé de reproduction préférentielle d'une information signée

(30) Priorität: 08.04.2010 DE 102010003740
(43) Veröffentlichungstag der Anmeldung: 12.10.2011
(73) Patentinhaber: Robert Bosch GmbH, 70442 Stuttgart (DE)
(72) Erfinder: Moennich, Joerg, 01159 Dresden (DE); Schaaf, Gunther, 70806 Kornwestheim (DE); Haug, Matthias, 74385 Pleidelsheim (DE)

(56) Entgegenhaltungen:
- DE-A1- 19 951 076
- DE-A1-102004 017 603
- DE-A1-102008 021 475
- US-A1- 2003 073 406
- US-A1- 2005 239 436

## Beschreibung

### Stand der Technik

Die Erfindung geht aus von einer Fahrerinformationseinrichtung für ein Fahrzeug mit einer Empfangseinheit und einer Ausgabeeinheit nach der Gattung der unabhängigen Ansprüche. Gegenstand der vorliegenden Erfindung ist auch die Kommunikation von Fahrzeugen untereinander und mit ihrer Infrastruktur.

Aus der Druckschrift GB-2330989 A ist eine Vorrichtung zum Senden einer Nachricht für ein Polizei- oder ein Rettungsfahrzeug bekannt, wobei die Nachricht nur in der direkten Nachbarschaft des Polizei- oder Rettungsfahrzeuges zu empfangen ist. Der Empfang der Nachricht erfolgt über ein Autoradio und überschreibt andere empfangene Signale. Die Nachricht wird an jedes Fahrzeug im lokalen Umkreis des Polizei- oder Rettungsfahrzeugs gesendet und an den jeweiligen Fahrer ausgegeben.

Die US 20030073406 A1 offenbart ein System für ein mobiles Netzwerk, in welchem jede mobile Einheit einen Knoten zum Empfangen und Versenden von Informationen darstellt. Das System verwendet optional eine sichere dynamische Verbindungszuweisung.

Aus der DE 102008021475 A1 ist eine Informationseinrichtung zur angepassten Informationsdarstellung in einem Fahrzeug bekannt. Dabei werden Informationen für einen Fahrzeugführer über Fahrzeug-zu-Fahrzeug oder Fahrzeug-zu-Infrastruktur Kommunikation an das Fahrzeug übermittelt und individuell aufbereitet.

### Offenbarung der Erfindung

### Vorteile der Erfindung

Eine Fahrerinformationseinrichtung mit den Merkmalen des unabhängigen Anspruchs 1 hat demgegenüber den Vorteil, dass sie es einer berechtigten Person ermöglicht, z.B. einem Fahrer eines Polizeifahrzeugs oder eines Rettungsfahrzeugs, eine bevorzugte Nachricht gezielt an ein anderes Fahrzeug zu senden und die Ausgabe an den Fahrer des Fahrzeugs sicher zu stellen.

Hierzu wird eine Nachricht in der Ausgabe gegenüber anderen Nachrichten bevorzugt, wenn die Nachricht von einem autorisierten Sender stammt. Ein Sender wird durch eine entsprechende Instanz, wie beispielsweise dem Staat, zum Senden einer bevorzugten Nachricht autorisiert. Damit ergibt sich für Polizei- und Rettungsfahrzeuge der Vorteil, mittels der bevorzugten Nachricht gezielt einem bestimmten Fahrer eine Information zu schicken, welche der Fahrer nicht verpassen oder ignorieren kann. Denn eine Ausgabeeinheit der Fahrerinformationseinrichtung gibt die bevorzugte Nachricht dann so wieder, dass eine Wiedergabe die Wahrnehmung des Fahrers zwingend auf sich zieht. Andere Fahrer weiterer Fahrzeuge bleiben von dieser Nachrichtenübermittlung unberührt und werden somit nicht gestört. Durch eine Überprüfung, ob der Absender der Nachricht autorisiert ist, wird sicher gestellt, dass diese Funktion nicht missbraucht werden kann.

Durch die in den abhängigen Ansprüchen aufgeführten Maßnahmen sind vorteilhafte Weiterbildungen und Verbesserungen der im unabhängigen Anspruch 1 angegebenen Fahrerinformationseinrichtung möglich.

Besonders vorteilhaft ist, dass die Ausgabeeinheit der Fahrerinformationseinrichtung nur die bevorzugte Nachricht ausgibt, also andere mögliche, nicht bevorzugte Mitteilungen unterbricht. Auf diese Weise wird erreicht, dass sich der Fahrer nur auf die bevorzugte Mitteilung konzentriert und nicht durch eine gleichzeitige Ausgabe anderer Mitteilungen der Mitteilung der bevorzugten Nachricht wenig Beachtung schenkt.

Zweckmäßiger Weise sollte die Mitteilung der bevorzugten Nachricht zeitlich begrenzbar sein, um eine Endlosausgabe zu verhindern und einen Fahrer nicht zu überfordern. Die bevorzugte Nachricht kann neben der Mitteilung für einen Fahrer weiterhin eine Information über die Dauer enthalten, die angibt, wie lange die Ausgabeeinheit der Fahrerinformationseinrichtung die Nachricht wiedergeben soll.

Vorteilhaft ist eine Einrichtung zur Bestätigung des Empfangs der Nachricht vorgesehen. Denn die Mitteilung der bevorzugten Nachricht hat das Ziel, den adressierten Fahrer zu erreichen. Hat der Fahrer die Mitteilung erhalten, so kann er den Erhalt mittels einer Eingabeeinheit der Fahrerinformationseinrichtung bestätigen. Die Ausgabe kann unterbrochen werden, sobald die Wahrnehmung der Information bestätigt wurde. Damit wird der Fahrer in seiner Wahrnehmung nicht weiter durch ein Signal der Ausgabeeinheit gestört.

Eine Schnittstelle zu einem Mobilfunknetz bietet den Vorteil, dass die bevorzugte Nachricht über Mobilfunk vom Sender zu der Fahrerinformationseinrichtung übermittelt werden kann. Sowohl der Sender als auch die Fahrerinformationseinrichtung benötigen in diesem Fall jeweils ein Mobilfunkgerät und eine Mobilfunknummer, um eine Nachrichtenübermittelung einzuleiten. Hierzu können bereits im Fahrzeug vorhandene Mobilfunkeinrichtungen, z.B. das mit einer Freisprechanlage des Fahrzeugs verbundene Mobilfunkgerät des Fahrers, verwendet werden.

Der Einsatz von Verschlüsselungsverfahren zum Übersenden einer bevorzugten Nachricht hat den Vorteil, dass die Kommunikation zwischen einem Sender der bevorzugten Nachricht und einer Fahrerinformationseinrichtung nicht abgehört werden kann. Des Weiteren kann die Verwendung von Verschlüsselungstechnologie zusätzlich für die Signatur der bevorzugten Nachricht eingesetzt werden, um eine Fälschung der bevorzugten Nachricht zu verhindern.

### Kurze Beschreibung der Zeichnungen

Ausführungsbeispiele der Erfindung sind in den Zeichnungen dargestellt und in der nachfolgenden Beschreibung näher erläutert.

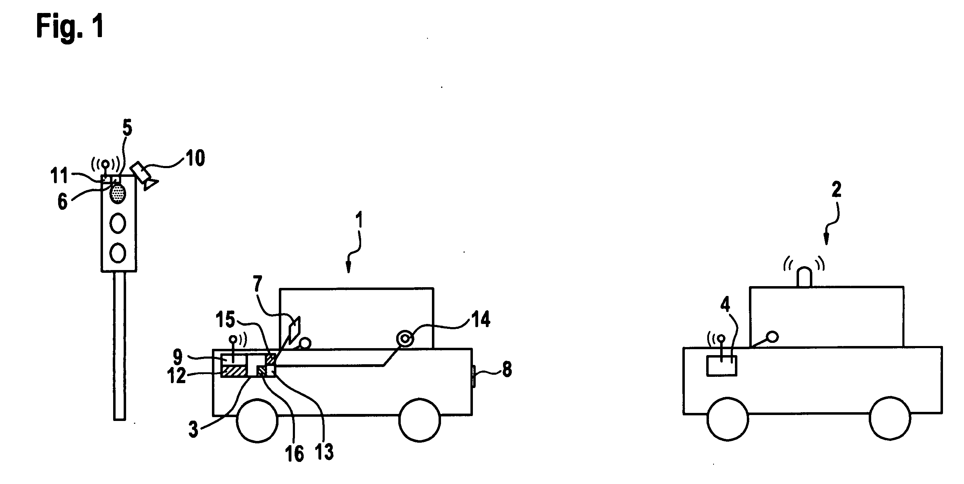

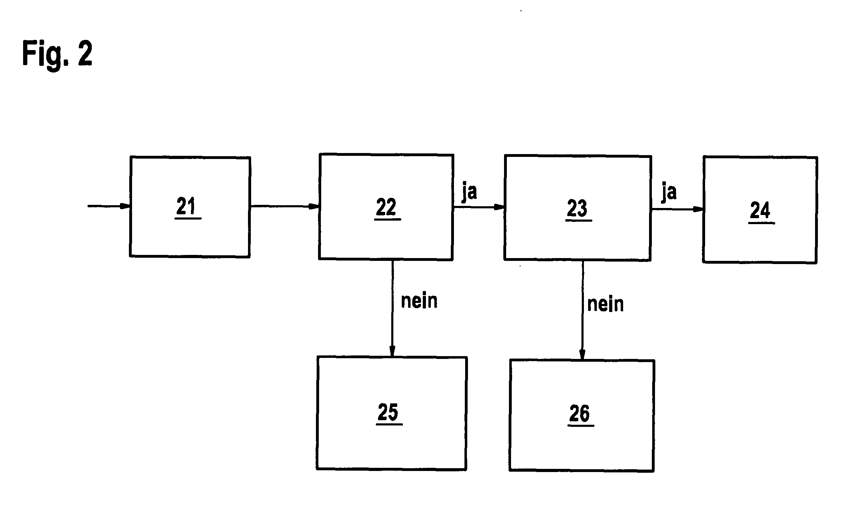

Figur 1 zeigt ein Ausführungsbeispiel einer erfindungsgemäßen Fahrerinformationseinrichtung, Figur 2 den Ablauf eines erfindungsgemäßen Verfahrens.

### Ausführungsformen der Erfindung

In Fig. 1 ist ein erstes Fahrzeug 1 mit einer Fahrerinformationseinrichtung 3 gezeigt. Die Fahrerinformationseinrichtung 3 beinhaltet eine Empfangseinheit 9 und eine Ausgabeeinheit 13. Optional ist eine Eingabeeinheit 15 und/oder eine Sendeeinheit 12 vorgesehen.

Die Empfangseinheit 9 prüft eine Nachricht, ob diese an die Empfangseinheit 9 adressiert ist. Dazu wird eine Adresse aus der empfangenen Nachricht mit einer Adresse der Empfangseinheit 9 verglichen. Beispielsweise kann zeichenweise die in der Nachricht gespeicherte Adresse mit einer im Speicher 16 der Empfangseinheit 9 abgelegten Adresse verglichen werden. Stimmen die Adressen nicht überein, wird der Empfang abgebrochen. Stimmen die beiden Adressen überein, wird als nächstes die Authentizität der empfangenen Nachricht überprüft. Wird dann die Authentizität der Nachricht festgestellt, wird die Nachricht als bevorzugte Nachricht erkannt und an die Ausgabeeinheit 13 weitergeleitet.

Die Empfangseinheit 9 empfängt und verarbeitet Nachrichten. Sie empfängt die Nachrichten von einer Sendeeinheit 4, 6, die sich außerhalb des ersten Fahrzeuges befindet. Der Empfangseinheit 9 ist eine Adresse, z.B. im Nummerncode, eine Mobilfunknummer oder eine IP-Adresse zugeordnet. Vorzugsweise ist diese Adressierung eindeutig der Empfangseinheit zugeordnet. In einer Ausführungsform weist eine Nachricht eine Adresse für einen Empfänger, eine Signatur über die Authentizität eines Senders und einen eigentlichen Inhalt zur Wiedergabe auf. Der eigentliche Inhalt kann eine Textnachricht, Audio- oder Videodaten, oder eine kodierte Nachricht sein. Die Fahrerinformationseinrichtung 3 kann einen Nachrichtencode einer entsprechenden, im Speicher abgelegten, Nachricht zuordnen. In diesem Fall wird statt des Nachrichtencodes die mit dem Nachrichtencode assoziierte Nachricht ausgegeben.

Optional kann die Nachricht eine Zeitangabe enthalten, welche die Dauer der Ausgabe angibt, und/oder eine Absenderadresse, die eine Antwort auf die Nachricht ermöglichen kann.

Die Übermittelung der Nachricht kann beispielsweise mittels eines Mobilfunkstandard (GSM, UMTS), Bluetooth, WLAN oder anderen drahtlosen Übermittelungsmethoden erfolgen. Diese Übermittelungstechniken können dabei die Aufgabe der Adressierung der Nachricht übernehmen.

Die Ausgabeeinheit 13 weist in einer ersten Ausführungsform eine optische und/oder eine akustische Ausgabe auf. Die optische Ausgabe kann über einen Bildschirm eines Navigationsgeräts, eines Autoradios, oder über eine andere Cockpitanzeige erfolgen. Dazu kann die gesamte Displayfläche als eine mögliche Mindestfläche definiert sein. Die bevorzugte Nachricht kann als Text oder als Grafik auf der Mindestfläche die Mindestfläche ausfüllend visualisiert werden. Beispielsweise kann ein Stopp-Schild auf dem Bildschirm dargestellt werden, wenn die bevorzugte Nachricht von einem Polizeifahrzeug kommt und der Empfänger zum Anhalten aufgefordert werden soll.

Eine andere Ausgabeform bietet ein Head-Up-Display. Die bevorzugte Nachricht wird wie über einen Bildschirm nun über das Head-Up-Display auf eine Windschutzscheibe oder eine entsprechende Fläche projiziert. Als Mindestgröße kann wieder eine Fläche für die Ausgabe definiert sein, z.B. eine 10 cm x 10 cm große Fläche.

Die Ausgabeeinheit 13 der Fahrerinformationseinrichtung 3 teilt für den Fall, dass der Empfang einer bevorzugten Nachricht ermittelt wurde, den Inhalt der bevorzugten Nachricht über beispielsweise eine Anzeigeeinrichtung 7 und/oder einen Lautsprecher 14 einem Fahrer des ersten Fahrzeugs 1 mit.

Die Ausgabe kann in einer weiteren Ausführungsform mittels eines akustischen Signals über den Lautsprecher 14 erfolgen. Das Signal kann sowohl eine Sprachnachricht, ein Geräusch oder ein Ton sein. Eine Sprachnachricht kann beispielsweise die Anweisung "Bitte rechts heranfahren!" enthalten, wenn ein Polizeifahrzeug die bevorzugte Nachricht aussendet, um einen Fahrer zum Anhalten anzuweisen. Ein Ton oder Geräusch, beispielsweise das Heulen einer Sirene oder ein Piepton, kann ebenso über den Lautsprecher 14 erfolgen. Eine Mindestlautstärke für die akustische Ausgabe wird erfindungsgemäß vorgegeben. Diese kann beispielsweise die gleiche Lautstärke sein, mit der eine Polizeisirene im Abstand von 50 m wahrgenommen wird.

In einer weiteren Ausführungsform ist auch eine haptische Ausgabe möglich. Diese kann beispielsweise das Rütteln eines Lenkrads sein, das über die Ausgabeeinrichtung 13 angeregt wird. Das Rütteln des Lenkrads sollte dabei die Wahrnehmung eines Fahrers erzielen, diesen aber nicht beim Fahren stören. Daher kann das Rütteln als eine Schwingungsbewegung in der Ebene des Lenkrads mit einer Amplitude von ca. 1 - 3 mm bei einer Frequenz von 10 - 25 Hz umgesetzt werden.

Die Ausgabe der Mitteilung kann zeitlich auf die übermittelte Zeitdauer begrenzt werden, wenn die bevorzugte Nachricht die Zeitangabe für die Dauer der Mitteilung beinhaltet.

Die Eingabeeinheit 15 dient zur Bestätigung des Empfangs bzw. der Wahrnehmung der bevorzugten Nachricht durch den Fahrer. Eine Bestätigung kann mittels eines Eingabeknopfs der Fahrerinformationseinrichtung 3 erfolgen. Ebenso kann ein Geschwindigkeitssensor bei Feststellung des Stillstands des ersten Fahrzeugs 1 als Eingabe dienen, und damit die Nachrichtenübermittlung anhalten.

In einer Ausführungsform ist ein zweites Fahrzeug 2 zum Versenden der bevorzugten Nachricht vorgesehen. Die Sendeeinheit 12 des ersten Fahrzeugs 1 kann eine Bestätigung der Nachricht an das zweite Fahrzeug 2 zurücksenden. Nach dem Empfang der Nachrichtenbestätigung im zweiten Fahrzeug 2 kann sein Fahrer sein Handeln anpassen. Beispielsweise kann in einem Szenario, in dem das zweite Fahrzeug 2 ein Polizeifahrzeug ist und dem ersten Fahrzeug 1 eine bevorzugte Nachricht mit Aufforderung zum Anhalten sendet, die Bestätigung des Empfangs einem Fahrer des Polizeifahrzeugs signalisieren, dass das erste Fahrzeugs 1 nun angehalten wird.

Das zweite Fahrzeug 2 weist eine weitere Sendeeinheit 4 zum Versenden einer bevorzugten Nachricht auf, die eine bevorzugte Nachricht aus der Adresse der Empfangseinheit 9, der Signatur der weiteren Sendeeinheit 4 und dem Nachrichteninhalt generiert.

Die Ermittlung der Adresse der Empfangseinheit kann erfolgen, indem ein Fahrer des zweiten Fahrzeugs 2 die Nummer des Kennzeichens 8 liest und auf eine Anfrage an eine zentrale Datenbank die Adresse enthält. Beispielsweise kann ein Polizist als Fahrer des zweiten Fahrzeugs 2 mittels Polizeifunk die Anfrage an eine Polizeizentrale richten. Die Polizeizentrale antwortet dann mit der Adresse der Sendeeinheit 4 der Fahrerinformationseinrichtung 3 des ersten Fahrzeugs 1.

Die Signatur der weiteren Sendeeinheit 4 kann in deren Speicher abgelegt sein. Die Signatur wird für ein zweites Fahrzeug 2 von einer autorisierten Instanz generiert. Die bevorzugte Nachricht von der weiteren Sendeeinheit 4 enthält immer die abgelegte Signatur. Eine Überprüfung der Authentizität der bevorzugten Nachricht, d.h. der Signatur der bevorzugten Nachricht, erfolgt in der Empfangseinheit 9.

Eine Ausführungsmöglichkeit zur Signaturgenerierung und Signaturüberprüfung bieten asymmetrische Verschlüsselungsverfahren. Die Überprüfung der Signatur kann beispielsweise mittels asymmetrischer Verschlüsselung erreicht werden. Asymmetrische Verschlüsselung verwendet einen öffentlichen Schlüssel und einen privaten Schlüssel. Ein Nachrichtenempfänger und Nachrichtensender hat ein solches Schlüsselpaar. Er selbst kennt als einziger seinen privaten Schlüssel, gibt aber den öffentlichen Schlüssel bekannt. Ein Sender einer bevorzugten Nachricht kann nun mit seinem privaten Schlüssel eine Nachricht verschlüsseln. Ein Empfänger kann nun die Korrektheit des Senders authentifizieren, indem er den öffentlichen Schlüssel des Senders nimmt, um die Nachricht zu entschlüsseln.

Die Authentifizierung des sendenden zweiten Fahrzeugs 2 kann damit beispielsweise dadurch erfolgen, dass der öffentliche Schlüssel von Polizeifahrzeugen und Rettungsfahrzeugen der Empfangseinheit 9 bekannt ist, und eine bevorzugte Nachricht von diesen Fahrzeugen mittels derer privaten Schlüssel verschlüsselt wird. Somit kann nicht nur sicher erkannt werden, dass die bevorzugte Nachricht gegenüber anderen Nachrichten, z.B. Radiosendungen, bevorzugt ist, sondern auch, dass der Absender zur Versendung berechtigt ist.

In einer weiteren Ausführungsform ist eine Ampel 5 ein Element der Infrastruktur. Die Ampel 5 enthält eine Videokamera 10, die in der Lage ist, eine Kennzeichenerkennung durchzuführen. Die ermittelte Kennzeichennummer dient zur Identifikation der Fahrzeugadresse. Dazu wird mittels einer Sendeeinheit 6 der Ampel 5 eine Abfrage verschickt. Diese Abfrage wird automatisch nach Empfang bei einer zentralen Datenbank mit der Empfangsadresse des ersten Fahrzeugs 1 beantwortet und zu der Ampel 5 geschickt. Ein Empfänger 11 der Ampel kann die Mitteilung der Datenbank empfangen. Die Ampel 5 generiert aus der Empfangsadresse und der Signatur der Ampel 5 eine bevorzugte Nachricht. Der Inhalt dieser Nachricht kann die Aufforderung zum Anhalten sein. Die Nachricht wird über die Sendeeinheit 6 der Ampel an das erste Fahrzeug 1 geschickt. Der Empfänger 11 der Ampel 5 kann ggf. eine von der Sendeeinheit 12 der Fahrerinformationseinrichtung 3 gesendete Rückmeldung verarbeiten.

In einer weiteren Ausführungsform ist eine elektronische Mautstation ein Element der Infrastruktur. In diesem Fall kann die Mautstation als bevorzugte Nachricht eine Bestätigung einer elektronischen Zahlung der Mautgebühr oder einen Hinweis auf eine misslungene elektronische Mautabbuchung geben.

Fig. 2 zeigt den Ablauf des beanspruchten Verfahrens auf. Eine Nachricht wird in einem Empfangsschritt 21 empfangen. In einem ersten Überprüfungsschritt 22 wird zuerst überprüft, ob die Adresse der Nachricht mit der Adresse des Fahrerinformationssystems übereinstimmt. Ist dies nicht der Fall, wird die Nachricht in einem ersten Abbruchschritt 25 ignoriert. Ist die Adresse korrekt, wird die Signatur der Nachricht in einem zweiten Überprüfungsschritt 23 überprüft. Ist das Ergebnis der Signaturprüfung positiv, d.h. die bevorzugte Nachricht stammt von einem Polizeifahrzeug oder einem Rettungsfahrzeug, findet eine Ausgabe der Mitteilung in einem Ausgabeschritt 24 statt, andernfalls wird die Nachricht in einem zweiten Abbruchschritt 26 ignoriert. In dem Ausgabeschritt 24 wird sichergestellt, dass die Mitteilung unter Einhaltung einer Mindestgröße stattfindet. Ebenso stellt der Ausgabeschritt sicher, dass andere Ausgaben, wie beispielsweise Radiosendungen, unterbrochen werden.

## Patentansprüche

1. Fahrerinformationseinrichtung (3) für ein Fahrzeug (1) mit einer Empfangseinheit (9) und mit einer Ausgabeeinheit (13), wobei die Empfangseinheit (9) zum Empfangen einer drahtlos übermittelten Nachricht ausgelegt ist, die eine Signatur aufweist, wobei die Signatur sowohl das Fahrzeug (1) als Adressat kennzeichnet als auch eine Berechtigung zu einer bevorzugten Mitteilung der Nachricht enthält, und wobei die Ausgabeeinheit (13) ausgelegt ist, in dem Fall, dass eine Berechtigung zur bevorzugten Mitteilung vorliegt, die Nachricht einem Fahrer des Fahrzeugs mittels eines akustischen Signals mit einer vorgegebenen Mindestlautstärke und/oder mittels eines optischen Signals mit einer vorgegebenen Mindestanzeigefläche und/oder mittels eines haptischen Signals mit einer vorgegebenen Mindeststärke mitzuteilen.

2. Fahrerinformationseinrichtung (3) nach Anspruch 1, **dadurch gekennzeichnet, dass** die Ausgabeeinheit (13) so gestaltet ist, dass sie eine Wiedergabe einer Nachricht unterbricht, die nicht als bevorzugt gekennzeichnet ist, wenn die bevorzugte Nachricht zur Wiedergabe ansteht.

3. Fahrerinformationseinrichtung (3) nach einem der vorherigen Ansprüche, **gekennzeichnet durch** eine Uhr, die mit der Ausgabeeinheit (13) so verbunden ist, dass die Nachricht der bevorzugten Mitteilung in einer vorgegebenen Zeitlänge ausgegeben wird.

4. Fahrerinformationseinrichtung (3) nach einem der vorherigen Ansprüche und mit einer Eingabeeinheit (15), **dadurch gekennzeichnet, dass** die Eingabeeinheit (15) eine Eingabe eines Fahrers zur Bestätigung des Empfangs der bevorzugten Mitteilung nach deren Ausgabe abfragt.

5. Fahrerinformationseinrichtung (3) nach einem der vorherigen Ansprüche, **gekennzeichnet durch** eine Schnittstelle zu einem Mobilfunknetz.

6. Verfahren zum Verarbeiten signierter Nachrichten mit einer Fahrerinformationseinrichtung (3) eines Fahrzeugs (1), bei dem eine Signatur einer empfangenen Nachricht darauf geprüft wird, ob die Nachricht für das Fahrzeug (1) adressiert ist und ob eine Berechtigung zu einer bevorzugten Mitteilung vorliegt, und wobei in dem Fall, dass eine Berechtigung zur bevorzugten Mitteilung vorliegt, die Nachricht mittels eines akustischen Signals mit einer vorgegebenen Mindestlautstärke, mittels eines optischen Signals mit einer vorgegebenen Mindestanzeigefläche und/oder mittels eines haptischen Signals mit einer vorgegebenen Mindeststärke ausgegeben wird.

7. Verfahren nach Anspruch 6, bei dem eine Ausgabe einer Nachricht, die nicht als bevorzugt gekennzeichnet ist, unterbrochen wird, bevor die Ausgabe einer bevorzugten Mitteilung erfolgt.

8. Verfahren nach einem der vorherigen Ansprüche 6 oder 7, bei dem während der Ausgabe einer bevorzugten Nachricht, eine Eingabe durch einen Fahrer zur Bestätigung des Empfangens der Nachricht abgefragt wird, und wobei in dem Fall, dass eine Eingabe erfolgt ist, die Ausgabe der bevorzugten Nachricht beendet wird.

9. Verfahren nach einem der vorherigen Ansprüche 6 bis 8, **dadurch gekennzeichnet, dass** die Verarbeitung der Nachrichten ein Verfahren zur Entschlüsselung beinhaltet.

## Claims

1. Driver information device (3) for a vehicle (1) having a reception unit (9) and having an output unit (13), wherein the reception unit (9) is designed to receive a wirelessly transmitted message which has a signature, wherein the signature both denotes the vehicle (1) as an addressee and contains authorization for preferred communication of the message, and wherein the output unit (13) is designed to communicate the message, if there is authorization for preferred communication, to a driver of the vehicle by means of an audible signal having a prescribed minimum volume and/or by means of a visual signal having a prescribed minimum display area and/or by means of a haptic signal having a prescribed minimum intensity.

2. Driver information device (3) according to Claim 1, **characterized in that** the output unit (13) is designed such that it interrupts reproduction of a message which is not denoted as preferred if the preferred message is awaiting reproduction.

3. Driver information device (3) according to one of the preceding claims, **characterized by** a clock which is connected to the output unit (13) such that the message in the preferred communication is output over a prescribed length of time.

4. Driver information device (3) according to one of the preceding claims and having an input unit (15), **characterized in that** the input unit (15) requests an input from a driver to confirm receipt of the preferred communication after the latter has been output.

5. Driver information device (3) according to one of the preceding claims, **characterized by** an interface to a mobile radio network.

6. Method for processing signed messages using a driver information device (3) in a vehicle (1), in which a signature from a received message is checked to determine whether the message is addressed to the vehicle (1) and whether there is authorization for preferred communication, and wherein if there is authorization for preferred communication then the message is output by means of an audible signal having a prescribed minimum volume, by means of a visual signal having a prescribed minimum display area and/or by means of a haptic signal having a prescribed minimum intensity.

7. Method according to Claim 6, in which output of a message which is not denoted as preferred is interrupted before a preferred communication is output.

8. Method according to one of the preceding Claims 6 and 7, in which during the output of a preferred message an input by a driver to confirm receipt of the message is requested, and wherein if an input has been made then the output of the preferred message is terminated.

9. Method according to one of the preceding Claims 6 to 8, **characterized in that** the processing of the messages includes a method for decryption.

## Revendications

1. Dispositif d'information du conducteur (3) pour un véhicule (1), comprenant une unité de réception (9) et une unité de sortie (13), l'unité de réception (9) étant conçue pour recevoir un message transmis sans fil qui comporte une signature, la signature caractérisant à la fois le véhicule (1) en tant que destinataire et contenant également une autorisation de communication préférée du message, et l'unité de sortie (13) étant conçue, dans le cas où une autorisation de transmission préférée est présente, pour communiquer le message à un conducteur du véhicule au moyen d'un signal acoustique ayant un volume minimal prédéterminé et/ou au moyen d'un signal optique ayant une surface d'affichage minimale prédéterminée et/ou au moyen d'un signal haptique ayant une intensité minimale prédéterminée.

2. Dispositif d'information du conducteur (3) selon la revendication 1, **caractérisé en ce que** l'unité de sortie (13) est conçue pour interrompre la reproduction d'un message qui n'est pas caractérisé comme étant préféré lorsque le message- préféré est disponible pour la reproduction.

3. Dispositif d'information du conducteur (3) selon l'une quelconque des revendications précédentes, **caractérisé par** une horloge qui est connectée à l'unité de sortie (13) de manière à ce que le message de la communication préférée soit fourni en sortie au cours d'un intervalle de temps prédéterminé.

4. Dispositif d'information du conducteur (3) selon l'une quelconque des revendications précédentes comportant une unité d'entrée (15), **caractérisé en ce que** l'unité d'entrée (15) demande une entrée d'un conducteur pour confirmer la réception de la communication préférée après sa fourniture en sortie.

5. Dispositif d'information du conducteur (3) selon l'une quelconque des revendications précédentes, **caractérisé par** une interface avec un réseau mobile.

6. Procédé de traitement de messages signés au moyen d'un dispositif d'information du conducteur (3) d'un véhicule (1), dans lequel une signature d'un message reçu est testée pour déterminer si le message est adressé au véhicule (1) et si une autorisation de communication préférée est présente, et dans lequel, dans le cas où une autorisation de communication préférée est présente, le message est fourni en sortie au moyen d'un signal acoustique ayant un volume minimum prédéterminé, au moyen d'un signal optique ayant une surface d'affichage minimale prédéterminée et/ou au moyen d'un signal haptique ayant une intensité minimale prédéterminée.

7. Procédé selon la revendication 6, dans lequel la fourniture en sortie d'un message qui est caractérisé comme étant préféré est interrompue avant que la fourniture en sortie d'une communication préférée se produise.

8. Procédé selon l'une quelconque des revendications 6 ou 7, dans lequel, pendant la fourniture en sortie d'un message préféré, une entrée effectuée par un conducteur pour confirmer la réception du message est demandée et dans lequel, dans le cas où une entrée est effectuée, la fourniture en sortie du message préféré est interrompue.

9. Procédé selon l'une quelconque des revendications 6 à 8, **caractérisé en ce que** le traitement des messages comporte un procédé de décryptage.
